(19) **Europäisches Patentamt**
**European Patent Office**
**Office européen des brevets**

(11) **EP 1 876 205 B1**

(12) **EUROPEAN PATENT SPECIFICATION**

(45) Date of publication and mention
of the grant of the patent:
**17.03.2010 Bulletin 2010/11**

(51) Int Cl.:
*C08L 67/04* (2006.01)    *C08K 13/02* (2006.01)
*C08K 3/34* (2006.01)    *C08K 5/29* (2006.01)
*C08K 5/524* (2006.01)    *C08L 101/16* (2006.01)
*C08K 5/00* (2006.01)

(21) Application number: **06745643.4**

(22) Date of filing: **25.04.2006**

(86) International application number:
**PCT/JP2006/308615**

(87) International publication number:
**WO 2006/118096 (09.11.2006 Gazette 2006/45)**

(54) **BIODEGRADABLE RESIN COMPOSITION, AND MOLDED BODY AND PRODUCTION METHOD THEREOF**

BIOLOGISCH ABBAUBARE HARZZUSAMMENSETZUNG UND FORMKÖRPER UND HERSTELLUNGSVERFAHREN DAFÜR

COMPOSITION DE RESINE BIODEGRADABLE, CORPS MOULE ET SON PROCEDE DE FABRICATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.04.2005 JP 2005128054**

(43) Date of publication of application:
**09.01.2008 Bulletin 2008/02**

(73) Proprietors:
- **UNITIKA LTD.**
  **Amagasaki-shi**
  **Hyogo 660-0824 (JP)**
- **SHISEIDO COMPANY, LTD.**
  **Tokyo 104-0061 (JP)**

(72) Inventors:
- **NAKAI, Miho c/o UNITIKA Ltd.**
  **Kyoto, 611-0021 (JP)**
- **KAWAHARA, Mitsuhiro c/o UNITIKA Ltd.**
  **Kyoto, 611-0021 (JP)**
- **UEDA, Kazue c/o UNITIKA Ltd.**
  **Kyoto, 611-0021 (JP)**
- **TAKAHASHI, Shun c/o SHISEIDO Research Center**
  **Kanagawa 224-0025 (JP)**
- **KUSUMOTO, Takahiro c/o SHISEIDO Research Center**
  **Kanagawa 224-0025 (JP)**
- **TANAKA, Mikiya c/o SHISEIDO Research Center**
  **Kanagawa 224-0025 (JP)**

(74) Representative: **Pautex Schneider, Nicole Véronique et al**
**Novagraaf International SA**
**25, avenue du Pailly**
**1220 Les Avanchets - Geneva (CH)**

(56) References cited:
**EP-A- 0 937 743**    **EP-A- 1 275 690**
**JP-A- 2003 082 212**    **JP-A- 2005 053 870**
**JP-A- 2005 082 642**    **JP-A- 2005 248 032**

**Description**

Technical Field

The present invention relates to a biodegradable resin composition having excellent color tone, strength and gas barrier property and having improved durability under a moisture heat condition, a molded body made of the composition, and a production method of the composition.

Background Art

In recent years, biodegradable resins typified by polylactic acid have attracted attention from the viewpoint of environmental conservation. Of the biodegradable resins, the polylactic acid is highly useful, because the polylactic acid has excellent transparency, is one of the most heat-resistant resins, is less costly due to the mass-producibility from vegetable-derived materials such as corn and sweet potato, and can contribute also to reduction of oil materials. However, when a molded body is produced by only the biodegradable resin, the molded body has insufficient long term storage stability and moisture heat resistance to cause problems such as the reduction of the strength and molecular weight caused by deterioration and the deteriorated appearance caused by the reduction of the molecular weight. Therefore, the molded body cannot endure applications where the molded body is repeatedly-used and prolonged use.

As a technique for solving this problem, JP-A-2001-261797 discloses that hydrolysis resistance is enhanced by blocking a carboxyl end of polylactic acid with a specific carbodiimide compound. As a method for enhancing the other performance of a biodegradable resin, JP-A-2001-49097 discloses that heat stability can be applied by adding a phenol phosphite compound to an aliphatic polyester resin.

As a method for enhancing the other performance of a biodegradable resin, JP-A-2002-338796 discloses that the strength and gas barrier property or the like of the biodegradable resin are enhanced by adding a layered silicate organically treated by specific ammonium ions to the biodegradable resin. JP-A-9-48908 discloses that hindered phenol, organic phosphite and a phosphonite compound are added to a thermoplastic polyester resin as a method for suppressing coloration when adding a layered silicate to the thermoplastic polyester resin. JP-A-2000-212422 discloses that the appearance and rigidity of a thermoplastic polyester resin made of diol and dicarboxylic acid can be enhanced by adding a layered silicate, one of benzophenone, benzotriazole and cyanoacrylate, and a phosphite compound to the thermoplastic polyester resin.

Disclosure of the Invention

Problem to be Solved by the Invention

However, when the layered silicate is used for the polylactic acid resin, low-molecular weight substances and metal salts of lactic acid are deposited on the surface of the molded body during the long term storage of the molded body obtained using the resin to cause problems such as deteriorated appearance and reduced color tone caused by coloration by an ionic compound contained in the layered silicate. Unfortunately, the strength is reduced by the long term storage.

Even if the carbodiimide compound of JP-A-2001-261797 is added for preventing the strength reduction during the long term storage of the polylactic acid resin containing the layered silicate, the coloration of the polylactic acid resin is insufficiently suppressed in the presence of the layered silicate, and the effect for improving the strength reduction is also insufficient. Also, the generation of the deposited substance on the surface of the molded body during the prolonged storage cannot be suppressed.

Even if the phenol phosphite, the hindered phenol compound or the phosphonite compound and the like is applied to the polylactic acid as described in JP-A-2001-49097 and JP-A-9-48908, the problems such as the strength reduction and the deposited substances during the long term storage are not solved although the effect for improving the color tone is observed in some compounds.

Even if benzophenone, benzotriazole or cyanoacrylate, and the phosphite compound are added in the system containing the layered silicate as described in JP-A-2000-212422, the appearance is insufficiently improved, and the moisture heat resistance is unsuitable for practical use. In addition, JP-A-2000-212422 does not refer the polylactic acid which is a biodegradability polyester.

To solve the aforesaid problems, it is an object of the present invention to provide a biodegradable resin composition having excellent color tone, strength and gas barrier property and suppressing the strength reduction and the generation of deposited substances under a moisture heat condition.

Means for Solving Problem

As the results of the intensive studies for solving the problems, the present inventors have found that the initial color tone is improved by adding a carbodiimide compound and phosphite organic compound of a specified amount with a layered silicate to a biodegradable polyester resin consisting mainly of polylactic acid, and the strength reduction and the generation of deposited substances in high temperature and high humidity are suppressed, and attained the present invention.

The characteristic of the present invention is as follows.

(1) A biodegradable resin composition comprises:

100 parts by mass of a biodegradable polyester resin containing not less than 80% by mass of polylactic acid; 0.1 to 5 parts by mass of a carbodiimide compound; 0.1 to 10 parts by mass of a layered silicate containing primary, secondary, tertiary or quaternary ammonium ions ionically banded between layers thereof; and 0.01 to 5 parts by mass of a phosphite organic compound.

(2) The biodegradable resin composition according to the item (1) comprises the phosphite organic compound and at least one additive selected from the group consisting of a hindered phenol compound, a benzotriazole compound, a triazine compound and a hindered amine compound in an amount of 0.01 to 5 parts by mass in total, instead of containing 0.01 to 5 parts by mass of the phosphite organic compound.

(3) The biodegradable resin composition according to the item (1) or (2), wherein the biodegradable resin composition has a strength-retaining rate of not less than 60% when being held at 60°C and at a relative humidity of 95% for 300 hours.

(4) The biodegradable resin composition according to any of the items (1) to (3), wherein the biodegradable resin composition has a YI value of not more than 25 when the resin composition is measured by a colorimeter.

(5) The biodegradable resin composition according to any of the items (1) to (4), wherein the layered silicate contains primary, secondary, tertiary or quaternary ammonium ions, pyridinium ions, imidazolium ions or phosphonium ions ionically bonded between layers thereof.

(6) A molded body comprises the biodegradable resin composition according to any of the items (1) to (5).

(7) A method for producing a biodegradable resin composition comprises:

adding a layered silicate when melt-mixing the biodegradable resin composition or when polymerizing a biodegradable polyester resin, in producing the biodegradable resin composition according to any of the items (1) to (5).

(8) A method for producing a biodegradable resin composition comprises:

adding a carbodiimide compound and a phosphite compound when melt-mixing the biodegradable resin composition or when polymerizing a biodegradable polyester resin, in producing the biodegradable resin composition according to any of the items (1) to (5).

Effect of the Invention

The present invention can provide a biodegradable resin composition having excellent color tone, strength and gas barrier property, maintaining strength and molecular weight for a long period of time even in high temperature and high humidity, and suppressing the generation of deposited substances such as low-molecular weight substances and metal salts of polylactic acid.

This resin composition can be used for various types of molded bodies, and can be well used for various applications. The resin composition of the present invention, which has biodegradability, can be composted when being discarded. Therefore, the resin composition can be reused as a fertilizer, and the amount of garbage can be reduced. The polylactic acid, which is generally produced from raw materials derived from corn and sweet potato or the like, can contribute to the prevention of depletion of petroleum resources.

Best Mode for Carrying Out the Invention

Hereinafter, the present invention will be described in detail.

A biodegradable polyester resin of a biodegradable resin composition of the present invention should contain not less than 80% by mass of polylactic acid. If the proportion of the biodegradable resin other than the polylactic acid is more than 50% by mass, the resulting biodegradable resin composition is inferior in mechanical strength, transparency and heat resistance. Raw materials derived from vegetable are preferably used for the polylactic acid since petroleum resources are reducibly used.

Examples of the polylactic acids employed as a major component of the biodegradable polyester resin include poly(L-lactic acid), poly(D-lactic acid), or a mixture or copolymer of poly(L-lactic acid) and poly(D-lactic acid). The polylactic acid is produced by employing a known melt polymerization method optionally along with a solid-phase polymerization method if needed.

Examples of the biodegradable resins which can be used for the present invention and are other than the polylactic acid include aliphatic polyesters such as poly(ethylene succinate), poly(butylene succinate) and poly(butylene succinate-co-butylene adipate) which are each prepared from a diol and a dicarboxylic acid; polyhydroxycarboxylic acids such as polyglycolic acid, poly(3-hydroxybutyric acid), poly(3-hydroxyvaleric acid) and poly(3-hydroxycaproic acid); poly(ω-hydroxyalkanoate) such as poly(ε-caprolactone) and poly(δ-valerolactone); and poly(butylene succinate-co-butylene terephthalate) and poly(butylene adipate-co-butylene terephthalate) which each contain an aromatic component but yet have biodegradability. Other examples include polyester amides, polyester carbonates, and polysaccharides such as starch. These components may be used either alone or in combination, and may be copolymerized. The components may be merely mixed to the polylactic acid which is the major component, and may be copolymerized.

In the present invention, the biodegradable resin composition contains a carbodiimide compound for applying long-term moisture heat resistance and appearance stability to the biodegradable resin composition.

Specific examples of the carbodiimide compounds used in the present invention include
N,N'-di-2,6-diisopropylphenylcarbodiimide,
N,N'-di-o-tolylcarbodiimide,
N,N'-diphenylcarbodiimide,
N,N'-dioctyldesylcarbodiimide,
N,N'-di-2,6-dimethylphenylcarbodiimide,
N-tolyl-N'-cyclohexylcarbodiimide,
N,N'-di-2, 6-di-tert-butylphenylcarbodiimide,
N-triyl-N'-phenylcarbodiimide,
N,N'-di-p-nitrophenylcarbodiimide,
N,N'-di-p-aminophenylcarbodiimide,
N,N'-di-p-hydroxyphenylcarbodiimide,
N,N'-di-cyclohexylcarbodiimide,
N,N'-di-p-tolylcarbodiimide,
p-phenylene-bis-di-o-tolylcarbodiimide,
p-phenylene-bis-dicyclohexylcarbodiimide,
hexamethylene-bis-dicyclohexylcarbodiimide,
ethylene-bis-diphenylcarbodiimide,
N,N'-benzylcarbodiimide,
N-octadecyl-N'-phenylcarbodiimide,
N-benzyl-N'-phenylcarbodiimide,
N-octadecyl-N'-tolylcarbodiimide,
N-cyclohexyl-N'-tolylcarbodiimide,
N-phenyl-N'-tolylcarbodiimide,
N-benzyl-N'-tolylcarbodiimide,
N,N'-di-o-ethylphenylcarbodiimide,
N,N'-di-p-ethylphenylcarbodiimide,
N,N'-di-o-isopropylphenylcarbodiimide,
N,N'-di-p-isopropylphenylcarbodiimide,
N,N'- di-o-isobutylphenylcarbodiimide,
N,N'-di-p-isobutylphenylcarbodiimide,
N,N'-di-2,6-diethylphenylcarbodiimide,
N,N'-di-2-ethyl-6-isopropylphenylcarbodiimide,
N,N'-di-2-isobutyl-6-isopropylphenylcarbodiimide,
N,N'-di-2,4,6-trimethylphenylcarbodiimide,
N,N'-di-2,4, 6-triisopropylphenylcarbodiimide,
N,N'-di-2,4,6-triisobutylphenylcarbodiimide,
diisopropylcarbodiimide,
dimethylcarbodiimide,

diisobutylcarbodiimide,
dioctylcarbodiimide,
t-butylisopropylcarbodiimide,
di-β-naphthylcarbodiimide,
di-t-butylcarbodiimide, and
aromatic polycarbodiimide (for example, trade name: Stabaksol I manufactured by SUMIKA BAYER URETHANE CO., LTD.). These carbodiimide compounds may be used alone. However, the carbodiimide compounds may be used in combination. In the present invention, N,N'-di-2,6-diisopropylphenylcarbodiimide having a high hydrolysis inhibiting effect is particularly preferable.

The proportion of the carbodiimide compound should be 0.1 to 5 parts by mass based on 100 parts by mass of the biodegradable polyester resin, and preferably 0.5 to 3 parts by mass. If the proportion is less than 0.1 part by mass, it is impossible to obtain long-term moisture heat resistance and appearance stability intended by the present invention. Even if the proportion is more than 5 parts by mass, a higher effect is not observed.

In the present invention, the biodegradable resin composition contains the layered silicate in order to enhance the strength and gas barrier property or the like of the biodegradable resin composition. The layered silicate is one type of a swellable lamellar clay mineral, and specific examples thereof include smectite, vermiculite and swellable fluoromica. Examples of the smectite include montmorillonite, beidellite, hectorite and saponite. Examples of the swellable fluoromica include Na-type tetrasilicic fluoromica, Na-type taeniolite and Li-type taeniolite. Other usable examples include layered silicates such as canemite, macatite, magadiite and kenyaite which contain neither aluminum nor magnesium. A natural layered silicate can be preferably employed as the layered silicate. Besides the natural layered silicates, a synthetic layered silicate may be employed. The synthetic layered silicate may be prepared by any of a melt process, an intercalation process and a hydrothermal process. Any of these layered silicates may be used alone. Layered silicates of different types, different production sites and different particle diameters may be used in combination.

For enhancing the dispersibility of the layered silicate in the biodegradable polyester resin which is the major component of the biodegradable resin composition of the present invention to enhance the gas barrier property primary, secondary, tertiary or quaternary ammonium ions, pyridinium ions, imidazolium ions or phosphonium ions are ionically bonded between layers of the layered silicate. The primary, secondary and tertiary ammonium ions are prepared by protonating primary, secondary and tertiary amines corresponding thereto. Examples of the primary amines include octylamine, dodecylamine and octadecylamine. Examples of the secondary amines include dioctylamine, methyloctadecylamine and dioctadecylamine. Examples of the tertiary amines include trioctylamine, dimethyldodecylamine and didodecylmonomethylamine. Examples of the quaternary ammonium ions include dihydroxyethylmethyloctadecylammonium, dihydroxyethylmethyldodecylammonium, tetraethylammonium, octadecyltrimethylammonium, dimethyldioctadecylammonium, hydroxyethyldimethyloctadecylammonium, hydroxyethyldimethyldodecylammonium, benzyldihydroxyethyldodecylammonium, benzyldihydroxyethyloctadecylammonium, methyldodecylbis(polyethyleneglycol)ammonium, and methyldiethyl(polypropylene glycol)ammonium. Examples of the phosphonium ions include tetraethylphosphonium, tetrabutylphosphonium, hexadecyltributylphosphonium, tetrakis(hydroxylmethyl)phosphonium and 2-hydroxyethyltriphenylphosphonium. Of these, a layered silicate treated with ammonium ions or phosphonium ions such as dihydroxyethylmethyloctadecylammonium, dihydroxyethylmethyldodecylammonium, hydroxyethyldimethyloctadecylammonium, hydroxyethyldimethyldodecylammonium, methyldodecylbis(polyethyleneglycol)ammonium, methyldiethyl(polypropyleneglycol)ammonium and 2-hydroxyethyltriphenylphosphonium having at least one hydroxyl group in its molecule is particularly preferable because of the strong affinity for the biodegradable polyester resin and the improved dispersibility. Any of these ionic compounds may be used either alone or in combination.

A method for treating the layered silicate with the primary, secondary, tertiary or quaternary ammonium ions or the phosphonium ions is not particularly limited. For example, inorganic ions between the layers of the layered silicate are first ion-exchanged with ammonium ions or phosphonium ions by dispersing the layered silicate in water or alcohol, adding the primary, secondary or tertiary amines and an acid (hydrochloric acid or the like), a quaternary ammonium salt, or a phosphonium salt and stirring the resulting mixture. Then, the resulting product is filtered, rinsed and dried.

The proportion of the layered silicate should be 0.1 to 10 parts by mass based on 100 parts by mass of the biodegradable polyester resin, preferably 0.5 to 8 parts by mass, and more preferably 2 to 5 parts by mass. If the proportion is less than 0.1 part by mass, it is impossible to obtain the enhanced effect of heat resistance and gas barrier property intended by the present invention. If the proportion is more than 10 parts by mass, the moisture heat resistance and moldability of the biodegradable polyester resin tend to be reduced.

In the present invention, this biodegradable resin composition contains a phosphite organic compound for suppressing the coloration of the biodegradable resin composition and applying heat resistance and moisture heat resistance to the biodegradable resin composition. Herein, examples of the phosphite organic compounds include tris(2,4-di-tert-butylphenyl)phosphite (trade name: IRGAFOS168 manufactured by Ciba Speciality Chemicals, Inc.), bis(2,4-di-tert-butylphenyl)pentaerythritoldiphosphite (trade name: IRGAFOS12 manufactured by Ciba Speciality Chemicals, Inc.), bis[2,4-bis(1,1-dimethylethyl)-6-methylphenyl]ethyl ester phosphite (trade name: IRGAFOS38 manufactured by Ciba Speciality Chemicals, Inc.), tetrakis(2,4-di-tert-butylphenyl)[1,1-biphenyl]4,4'-diylbisphosphonite (trade name: IRGAFOS P-EPQ manufactured by Ciba Speciality Chemicals, Inc.), 3,9-bis(p-nonylphenoxy)-2,4,8,10-tetraoxa-3,9-diphosphaspiro[5,5]undecane (trade name: Adeka Stub PEP-4C manufactured by ASAHI DENKA CO., LTD.), O,O'-dialkyl (C=8 to 18)pentaerythritoldiphosphite (trade name: Adeka Stub PEP-8, PEP-8W manufactured by ASAHI DENKA CO., LTD.), bis(2,4-di-tert-butylphenyl)pentaerythritoldiphosphite (trade name: Adeka Stub PEP24G manufactured by ASAHI DENKA CO., LTD.), bis(2,6-di-tert-butyl-4-methylphenyl)pentaerythritol-diphosphite (trade name: Adeka Stub PEP36 and PEP-36Z manufactured by ASAHI DENKA CO., LTD.), 2,2'-methylenebis(4, 6-di-tert-butylphenyl)-2-ethylhexylphosphite (trade name: Adeka Stub HP-10 manufactured by ASAHI DENKA CO., LTD.), tris(2,4-di-tert-butylphenylphosphite) (trade name: Adeka Stub 2112 manufactured by ASAHI DENKA CO., LTD.), 4,4'-butylidene-bis(6-tert-butyl-3-methylphenyl-ditridecylphosphite) (trade name: Adeka Stub 260 manufactured by ASAHI DENKA CO., LTD.), hexaalkyl or [trialkyl(C=8 to 18)tris(alkyl(C=8,9)phenyl)]1,1,3-tris(3-t-butyl-6-methyl-4-oxyphenyl)-3-methylpropanetriphosphite (trade name: Adeka Stub 522A manufactured by ASAHI DENKA CO., LTD.), di or mono(dinonylphenyl)mono or di(p-nonylphenyl)phosphite (trade name: Adeka Stub 329K manufactured by ASAHI DENKA CO., LTD.), trisnonylphenylphosphite (trade name: Adeka Stub 1178 manufactured by ASAHI DENKA CO., LTD.), (1-methylethylidene)-di-4,1-phenylene-tetra-C12-15-alkylphosphite (trade name: Adeka Stub 1500 manufactured by ASAHI DENKA CO., LTD.), 2-ethylhexyl-diphenylphosphite (trade name: Adeka Stub C manufactured by ASAHI DENKA CO., LTD.), diphenylisodecylphosphite (trade name: Adeka Stub 135A manufactured by ASAHI DENKA CO., LTD.), triisodecylphosphite (trade name: Adeka Stub 3010 manufactured by ASAHI DENKA CO., LTD.), triphenylphosphite (trade name: TPP manufactured by ASAHI DENKA CO., LTD.), and hydrogenated bisphenol A pentaerythritolphosphite polymer (trade name: JPH3800 manufactured by JOHOKU CHEMICAL CO., LTD.).

Of these, pentaerythritol diphosphite (PEP 24G), bis(2,6-di-tert-butyl-4-methylphenyl)pentaerythritol-diphosphine (PEP36, PEP-36Z), tris(2,4-di-tert-butylphenylphosphite)(2112), hydrogenated bisphenol A-pentaerythritol phosphite polymer (JPH3800) or the like are more preferable. These may be used either alone or in combination.

The proportion of the phosphite organic compound should be 0.01 to 5 parts by mass based on 100 parts by mass of the biodegradable polyester resin, and preferably 0.05 to 2 parts by mass. If the proportion is less than 0.01 part by mass, it is impossible to obtain the suppression of coloration, the heat resistance and the moisture heat resistance, which are intended by the present invention. If the proportion is more than 5 parts by mass, the physical properties of the resin composition are reduced by the decomposition of the phosphite organic compound.

The resin composition of the present invention can contain the phosphite organic compound, as well as at least one additive selected from the group consisting of a hindered phenol compound, a benzotriazole compound, a triazine compound and a hindered amine compound. Since this additive can provide the same effect as that of the case where the phosphite organic compound is used alone, the additive is useful when the content of the phosphite compound is limited by restriction or the like. In using this additive, the total proportion of the additive and phosphite organic compound should be 0.01 to 5 parts by mass based on 100 parts by mass of the biodegradable polyester resin, and preferably 0.05 to 2 parts by mass. If the proportion is less than 0.01 part by mass, it is impossible to obtain the suppression of coloration, the heat resistance and the moisture heat resistance, which are intended by the present invention. If the proportion is more than 5 parts by mass, the physical properties are reduced and the coloration is caused by these compounds and decomposed substances.

Examples of the hindered phenol compounds in the present invention include pentaerythritoltetrakis[3-(3,5-di-tert-butyl-hydroxyphenyl)propionate] (trade name: IRGANOX 1010 manufactured by Ciba Speciality Chemicals, Inc.), thiodiethylenebis[3-(3,5-di-tert-butyl-4-hydroxyphenyl)propionate] (trade name: IRGANOX 1035 manufactured by Ciba Speciality Chemicals, Inc.), octadecyl-3-(3,5-di-tert-butyl-4-hydroxyphenyl)propionate (trade name: IRGANOX 1076 manufactured by Ciba Speciality Chemicals, Inc.), N,N'-hexane-1,6-diylbis[3-(3,5-di-tert-butyl-4-hydroxyphenyl)propionamide] (trade name: IRGANOX 1098 manufactured by Ciba Speciality Chemicals, Inc.), benzene propanoic acid, 3,5-bis(1,1-dimethylethyl)-4-hydroxy, C7-C9 side-chain alkylester (trade name: IRGANOX 1135 manufactured by Ciba Speciality Chemicals, Inc.), 2,4-dimethyl-6-(1-methylpentadecyl)phenol (trade name: IRGANOX 1141 manufactured by Ciba Speciality Chemicals, Inc.), diethyl[{3,5-bis(1,1-dimethylethyl)-4-hidoroxyphenyl}methyl]phosphonate (trade name: IRGANOX 1222 manufactured by Ciba Speciality Chemicals, Inc.), 3,3',3",5,5',5"-hexa-tert-butyl-a,a',a"-(mesitylene-2,4,6-triyl)tri-p-cresol (trade name: IRGANOX 1330 manufactured by Ciba Speciality Chemicals, Inc.), a mixture (trade name: IRGANOX 1425WL manufactured by Ciba Speciality Chemicals, Inc.) of calcium diethylbis[[[3,5-bis(1,1-dimethylethyl)-4-hydroxyphenyl]methyl]phosphonate] and polyethylene wax, 4,6-bis(octylthiomethyl)-o-cresol (trade name: IRGANOX 1520L manufactured by Ciba Speciality Chemicals, Inc.), ethylenebis(oxyethylene)bis[3-(tert-buyl-4-hydroxy-m-tolyl) propionate] (trade name: IRGANOX 245 manufactured by Ciba Speciality Chemicals, Inc.), 1,6-hexanediol-bis[3(3,5-di-t-butyl-4-hydroxyphenyl)propionate] (trade name: IRGANOX 259 manufactured by Ciba Speciality Chemicals, Inc.), 1,3,5-tris(3,5-di-tert-butyl-4-hydroxybenzyl)isocyanuric acid (trade name: IRGANOX 3114 manufactured by Ciba Speciality Chemicals, Inc.), 1,3,5-tris[(4-tert-butyl-3-hydroxy-2,6-xylyl)methyl]-1,3,5-triazine-2,4,6(1H,3H,5H)-trione (trade name: IRGANOX 3790 manufactured by Ciba Speciality Chemicals, Inc.), a reaction product (trade name: IRGANOX 5057 manufactured by Ciba Speciality Chemicals, Inc.) of N-phenylbenzenamine and 2,4,4-trimethylpentene, 6-(4-hydroxy-3,5-di-t-butylanilino)-2,4-bisoctylthio-1,3,5-triazine (trade name: IRGANOX 565 manufactured by Ciba Speciality Chemicals, Inc.), 1,3,5-tris(3,5-di-tert-butyl-4-hydroxybenzyl)isocyanuric acid (trade name: Adeka Stub AO-20 manufactured by ASAHI DENKA CO., LTD.), 1,1,3-tris(2-methyl-4-hydroxy-5-tert-butylphenyl)butane (trade name: Adeka Stub AO-30 manufactured by ASAHI DENKA CO., LTD.), 4,4'-butylidenebis(6-tert-butyl-3-methylphenol) trade name: Adeka Stub AO-40 manufactured by ASAHI DENKA CO., LTD.), 3-(4'-hydroxy-3',5'-di-tert-butylphenyl)propionic acid-n-octadecyl (trade name: Adeka Stub AO-50 manufactured by ASAHI DENKA CO., LTD.), pentaerythritoltetrakis[3-(3', 5'-di-tert-butyl-4'-hydroxyphenyl)propionate] (trade name: Adeka Stub AO-60 manufactured by ASAHI DENKA CO., LTD.), triethyleneglycolbis[3-(3-t-butyl-4-hydroxy-5-methylphenyl)propionate] (trade name: Adeka Stub AO-70 manufactured by ASAHI DENKA CO., LTD.), 3,9-bis[1,1-dimethyl-2-[β-(3-t-butyl-4-hydroxy-5-methylphenylpropionyloxy) ethyl]2,4,8,10-tetraoxspiro[5,5]-undecane (trade name: Adeka Stub AO-80 manufactured by ASAHI DENKA CO., LTD.), 1,3,5-trimethyl-2,4,6-tris(3,5-di-tert-butyl-4-hydroxybenzyl)benzene (trade name: Adeka Stub AO-330 manufactured by ASAHI DENKA CO., LTD.), and 2,2-oxamidebis-[ethyl-3-(3,5-di-t-butyl-4-hydroxyphenyl) propionate] (trade name: Naugard XL-1 manufactured by Crompton-Uniroyal Chemical).

Of these, particularly, pentaerythritoltetrakis[3-(3,5-di-tert-butyl-hydroxyphenyl)propionate] (IRGANOX 1010), 1,3,5-trimethyl-2,4,6-tris(3,5-di-tert-butyl-4-hydroxybenzyl)benzene (AO-330) or the like are preferably used. These may be used either alone or in combination.

Examples of the benzotriazole compounds include 2-(2'-hydroxy-5'-methylphenyl)benzotriazole (trade name: TINUVIN P manufactured by Ciba Speciality Chemicals, Inc.), 2-(2H-benzotriazole-2-yl)-4,6-bis(1-methyl-1-phenylethyl) phenol (trade name: TINUVIN234 manufactured by Ciba Speciality Chemicals, Inc.), and 2-(2'-hydroxy-3'-t-butyl-5'-methylphenyl)-5-chlorobenzotriazole (trade name: TINUVIN326 manufactured by Ciba Speciality Chemicals, Inc.).

Examples of the triazine compounds include 2-(4,6-diphenyl-1,3,5-triazine-2-yl)-5-[(hexyl)oxy]-phenol (trade name: TINUVIN1577FF manufactured by Ciba Speciality Chemicals, Inc.), and 2-[4,6-bis(2,4-dimethylphenyl)-1,3,5-triazine-2-yl]-5-(octyloxy)phenol (trade name: UV-1164 manufactured by Cytec Industries).

Examples of the hindered amine compounds include poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}] (trade name: CHIMASSORB944FDL manufactured by Ciba Speciality Chemicals, Inc.).

It is preferable that the biodegradable resin composition of the present invention has a strength-retaining rate of not less than 60% when 300 hours pass at 60°C and at a relative humidity of 95%. Herein, the strength-retaining rate is prepared by producing a test piece using a resin composition, measuring the test piece based on ASTM-D790, and calculating the retaining rate of the flexural strength before and after being treated.

The resin composition of the present invention has excellent color tone, and preferably, the resin composition has a YI value of not more than 25. If the YI value is more than this value, the commercial value, for example, of a molded body molded by the resin composition is reduced. Herein, the YI value means yellowness calculated from three tristimulus values. The larger the YI value is, the more intensive the yellowness is, and the smaller the YI value is, the weaker the yellowness is.

Examples of methods for adding a carbodiimide compound, a phosphite organic compound and the above additive in producing the biodegradable polyester resin of the present invention include a method for melt-kneading the biodegradable polyester resin, the carbodiimide compound, the phosphite organic compound and the additive using an ordinary kneader, and a method for polymerizing a monomer of the biodegradable polyester in the presence of a predetermined amount of the carbodiimide compound, phosphite organic compound and additive with respect to the monomer to provide the biodegradable polyester resin composition. Of these, the former method is preferable because of less reduction of the molecular weight of the biodegradable polyester resin and simple addition or the like.

Examples of the methods for adding the layered silicate in producing the biodegradable resin composition of the present invention include a method for adding the layered silicate when polymerizing the biodegradable polyester resin, a method for adding the layered silicate when melt-kneading the biodegradable polyester resin, and a method for adding the layered silicate when molding a molded body. Of these, it is preferable to add the layered silicate when melt-kneading the biodegradable polyester resin or molding the molded body. Examples of the methods for adding the layered silicate when melt-kneading the biodegradable polyester resin and when molding the molded body include a method for previously dry-blending a resin and a layered silicate and supplying the blended mixture to an ordinary kneader or an injection molding machine, and a method for adding the layered silicate during kneading using a side feeder.

In melt-kneading the biodegradable polyester resin, an ordinary extruder such as a single screw extruder, a twin screw extruder, a roll kneader and Brabender can be used. The use of the twin screw extruder is preferable for improving the dispersibilities of the layered silicate, carbodiimide compound, phosphite organic compound and additive.

Magnesium stearate, a phosphate ester surface-active agent, and a partially saponified ester of a montanic acid or the like may be added to the biodegradable polyester resin for improving the dispersibility of the layered silicate. For improving this dispersibility, a resin may be denatured with anhydrous maleic acid or the like and a polar group may be introduced.

A heat stabilizer, an oxidation inhibitor, a pigment, a weather-proof agent, a flame retarder, a plasticizer, a lubricant, a release agent, an antistatic agent, a filler and a dispersant or the like other than the specified ones in present invention may be added to the resin composition of the present invention, as long as the effect of the present invention is not damaged by the addition. Examples of the heat stabilizer and the oxidation inhibitor include sulfur compounds, copper compounds and halides of alkali metals, which may be used as a mixture. These additives are generally added in melt-kneading or polymerizing. Exemplary inorganic fillers among the fillers include talc, calcium carbonate, zinc carbonate, walastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whisker, ceramic whisker, potassium titanate, boron nitride, graphite, glass fibers and carbon fibers. Exemplary organic fillers among the fillers include naturally occurring polymers such as starch, cellulose particles, wood powder, bean curd lees, chaff, bran and kenaf and denatured materials thereof.

To the biodegradable resin composition of the present invention, a non-biodegradable resin such as polyamide (nylon), polyethylene, polypropylene, polybutadiene, polystyrene, an AS resin, an ABS resin, polyacrylic acid, polyacrylic acid ester, polymethacrylic acid, polymethacrylic acid ester, polyethylene terephthalate, polyethylenenaphthalate, polycarbonate and a copolymer thereof may be added as long as the effect of the present invention is not damaged.

The resin composition of the present invention can be used as various molded bodies by known molding processes such as injection molding, blow molding and extrusion molding.

For the injection molding process, it is possible to employ an ordinary injection molding process, a gas injection molding process and an injection press molding method. A cylinder temperature in the injection molding process, that is, the molding temperature should be not less than the melting point (Tm) or fluidization temperature of polylactic acid, is preferably 180 to 230°C, and more preferably 190 to 220°C. If the molding temperature is too low, the flowability of the resin is reduced to cause poor molding or overloading of a molding apparatus. Conversely, if the molding temperature is too high, the polylactic acid is decomposed, so that the resulting molded body disadvantageously has a reduced strength or is colored. On the other hand, the mold temperature is preferably not more than Tg-10°C when the mold temperature is not more than the glass transition temperature Tg of the resin composition. The mold temperature may not be less than Tg and can not be more than Tm-30°C for accelerating the crystallization for improvement of the rigidity and heat resistance of the molded body.

For the blow molding process, it is possible to employ a direct blowing method in which material chips are directly molded, an injection blow molding method in which a preform (bottomed parison) is first injection-molded and then blow-molded, and a stretch blow molding method. For the injection blow molding method, it is also possible to employ a hot parison method in which a preform is blow-molded immediately after formation of the preform, or a cold parison method in which a preform is once cooled and unmolded and then heated again to be blow-molded.

As the extrusion process, a T-die technique and a circular die technique or the like may be employed. The extrusion temperature should be not less than the melting point (Tm) or fluidization temperature of the polylactic acid as the raw material. The extrusion temperature is preferably in the range of 180 to 230°C, more preferably 190 to 220°C. If the extrusion temperature is too low, the operation is unstabilized or overloaded. Conversely, if the extrusion temperature is too high, the polylactic acid is decomposed, so that the extrusion-molded body disadvantageously has a reduced strength or is colored. A sheet or a pipe or the like can be produced by extrusion molding.

Specifically, the sheet or pipe prepared by the extrusion process, may be used as a material sheet for deep drawing, a material sheet for batch foaming, cards such as credit cards, desk pads, clear files, straws, and agricultural/horticultural rigid pipes or the like. A food container, an agricultural/horticultural container, a blister package and a press-through package or the like may be produced by a deep drawing process by vacuum-forming, air-pressure-forming or vacuum-air-pressure-forming the sheet. The deep-drawing temperature and the heat treatment temperature are preferably Tg+20°C to Tg+100°C. If the deep drawing temperature is less than Tg+20°C, the deep drawing is difficult. Conversely, if the deep drawing temperature is more than Tg+100°C, the polylactic acid is decomposed; the resulting container has an uneven wall thickness and an uneven orientation thereby to have a reduced impact resistance. The shapes of the food container, the agricultural/horticultural container, the blister package and the press-through package are not particularly limited, but the sheet is preferably drawn to a depth of not less than 2 mm for containing food stuff, articles, and pharmaceutical products or the like. The thicknesses of the containers are not particularly limited, but preferably not less than 50 $\mu$m more preferably 150 to 500 $\mu$m, in consideration of strength. Specific examples of the food container include trays for perishable food, containers for instant food, containers for fast food and containers for a lunch box. Specific examples of the agricultural/horticultural container include seedling pots. Specific examples of the blister package include containers for packaging foods. Other examples of the package include packages for various articles such as stationery, toys and dry batteries.

Other examples of the molded bodies produced using the resin composition of the present invention include tableware such as dishes, bowls, pots, chopsticks, spoons, forks and knives; fluid containers; container caps; stationery such as rulers, writing utensils, clear cases and CD cases; daily commodities such as sink strainers, wastebaskets, washbowls, toothbrushes, hair combs and dress hangers; agricultural/horticultural materials such as flower pots and seedling pots; toys such as plastic models; electrical appliance resin components such as air conditioner panels and housings; and automotive resin components such as bumpers, interior panels and door trims. The shape of the fluid container is not particularly limited, but the fluid container preferably has a depth of not less than 20 mm for containing a fluid. The wall thickness of the container is not particularly limited, but is not less than 0.1 mm, preferably 0.1 to 5 mm, in view of strength. Specific examples of the fluid container include drinking cups and bottles for dairy products, soft drinks and alcoholic beverages; temporary storage containers for condiments such as soy source, Worcester source, mayonnaise, ketchup and cooking oil; containers for shampoo and rinse agents; containers for cosmetics; and containers for agricultural chemicals.

The molded body made of the resin composition of the present invention is subjected to a heat treatment to accelerate the crystallization of the molded body and thereby the heat resistance can be also enhanced. The heat treatment temperature is usually not less than Tg and not more than Tm.

The resin composition of the present invention can be also made of fibers. Although the producing method is not particularly limited, a method for melt spinning and drawing is preferable. The melt spinning temperature is preferably 160°C to 260°C. If the melt spinning temperature is less than 160°C, the melting extrusion tends to be difficult. On the other hand, when the melt spinning temperature is more than 260°C, the resin composition is remarkably decomposed, and thereby fibers having high strength tend to be hardly obtained. The melt-spun fiber thread line may be drawn at a temperature of not less than Tg so as to be set to the intended fiber diameter. The obtained fibers are used as fibers for clothing, fibers for industrial materials, and fibers for short fiber nonwoven or the like.

The resin composition of the present invention can be also developed to filament nonwoven fabric. Although the producing method is not particularly limited, examples thereof include a method for forming the resin composition into fibers by a high speed fiber spinning method, depositing and webbing the fibers, and making the web into fabrics using heat pressure bonding method or the like.

Examples

The present invention will hereinafter be described more specifically by way of examples thereof. However, the present invention is not limited to the following examples.

[Measuring Method or the like]

Measuring methods or the like used for evaluating the following examples and comparative examples are as follows.

(1) Flexural Strength:

A resin composition was injection-molded to obtain a molded piece of 150 mm x 13 mm x 3 mm. The molded piece was subjected to an annealing treatment, and was used as a sample. The flexural strength was measured in conformity with ASTM-D790 by applying a load at a deformation rate of 1 mm/min. The production conditions of the molded pieces are as follows.

Injection Molding Condition:

By means of an injection molding machine (IS-80G manufactured by Toshiba Machine), a cylinder temperature, a metal mold temperature, an injection pressure, an injection time, a cooling time and an interval are respectively set to 190 to 170°C, 15°C, 60%, 20 seconds, 20 seconds and 2 seconds. As the metal mold, a metal mold for 1/8 inch three-point bending dumbbell test piece of ASTM standard was used.

Annealing Treatment Condition

The molded pieces were heated for 30 minutes in an oven of 120°C.

(2) Hydrolysis Resistance Evaluation

Samples subjected to an injection molding and an annealing treatment in the same manner as in the item (1) were stored at 60°C and at a relative humidity of 95% for 300 hours and 500 hours using a thermo-hygrostat (trade name: IG400, manufactured by Yamato Scientific Co., Ltd.). The flexural strengths were then measured in the same manner as in the item (1), and the strength-retaining rates were calculated to evaluate hydrolysis resistance.

The strength-retaining rate (%) was calculated as (strength-retaining rate)=(strength after being stored)/(strength before being stored) x 100.

(3) Yellowness (YI value):

A color-difference meter Z-Σ90 manufactured by Nippon Densyoku Industries, Co. was used. A glass cell having a diameter of 30 mm and a length of 12 mm was filled with pellets each having a height of 3 mm, a width of 3 mm and a thickness of 1.5 mm to measure the yellowness.

(4) Appearance:

Visual evaluation was performed. The appearance having no change was evaluated as "very good"; The appearance having some blanching occurred but having no deposit of metal salts and low-molecular weight substances was evaluated as "good"; and the appearance having the deposited metal salts and low-molecular weight substances was evaluated as "poor".

(5) Oxygen Permeability Coefficient:

A sheet-shaped sample (thickness: 200 to 300 μm) was produced by inserting resin composition pellets with a pair of aluminum plates, heat-pressing the pellets at 190°C for 150 seconds, and cold-pressing the heat-pressed article at 25°C for 20 seconds. A measuring sample was prepared by previously humidity-controlling the sheet-shaped sample at 20°C and at a relative humidity of 90% for 24 hours. The oxygen permeability of this measuring sample was measured by a differential pressure method using a differential pressure gas permeability meter (GTR-30XAU type manufactured by Yanaco). The oxygen permeability coefficient (ml·mm/m$^2$·day·MPa) was calculated by

```
(oxygen permeability coefficient)=(oxygen permeability) x
(sample thickness).
```

The value of the oxygen permeability coefficient was an indicator of gas barrier property. The smaller this value is, the more excellent the gas barrier property is.

[Raw materials]

Various raw materials used in the following examples and comparative examples are shown.
(1) Biodegradable Resin

Resin A: polylactic acid (trade name: Nature Works manufactured by Cargill Dow, weight average molecular weight (MW): 190,000, melting point: 170°C)
Resin B: terephthalic acid/adipic acid/1,4-butanediol copolymer (trade name: Ecoflex manufactured by BASF, melting point: 108°C, melt flow rate (MFR): 5 g/10 minutes (190°C, load: 2.16 kg))

(2) Carbodiimide Compound
CDI: N,N'-di-2,6-diisopropylphenylcarbodiimide (trade name: Stabaksol I manufactured by SUMIKA BAYER URETHANE CO., LTD.)
(3) Phosphite Organic Compound
PEP-36: bis(2,6-di-tert-butyl-4-methylphenyl)-pentaerythrit-ol-di-phosphite (trade name: Adeka Stub PEP36 manufactured by ASAHI DENKA CO., LTD.)
JPH3800: hydrogenated bisphenol A · pentaerythritol phosphite polymer (trade name: JPH3800 manufactured by JOHOKU CHEMICAL CO., LTD.)
2112: tris(2,4-di-tert-butylphenylphosphite) (trade name: Adeka Stub 2112 manufactured by ASAHI DENKA CO., LTD.)
(4) Hindered Phenol Compound
AO-330: 1,3,5-trimethyl-2,4,6-tris(3,5-di-tert-butyl-4-hydroxybenzyl)benzene (trade name: Adeka Stub AO-330 manufactured by ASAHI DENKA CO., LTD.)
XL-1: 2,2-oxamidobis-[ethyl-3-(3,5-di-t-butyl-4-hydroxyphenyl)propionate] (trade name: Naugard XL-1 manufactured by Crompton-Uniroyal Chemical)
(5) Benzotriazole Compound

T-234: 2-(2H-benzotriazole-2-yl)-4-6-bis(1-methyl-1-phenylethyl)phenol (trade name: TINUVIN234 manufactured by Ciba Speciality Chemicals, Inc.)

T-326: 2-(2'-hydroxy-3'-t-butyl-5'-methylphenyl)-5-chlorobenzotriazole (trade name: TINUVIN326 manufactured by Ciba Speciality Chemicals, Inc.)

(6) Triazine Compound

UV-1164: 2-[4,6-bis(2,4-dimethylphenyl)-1,3,5-triazine-2-yl]-5-(octyloxy)phenol (trade name: UV-1164 manufactured by Cytec Industries)

(7) Hindered Amine Compound

CHIMASSOR: poly[{6-(1,1,3,3-tetra-methylbutyl)amino-1,3,5-triazine-2,4-diyl}{(2,2,6,6-tetramethyl-4-piperidyl)imino}hexamethylene{(2,2,6,6-tetramethyl-4-piperidyl)imino}] (trade name:CHIMASSORB944FDL manufactured by Ciba Speciality Chemicals, Inc.)

(8) Layered silicate

MEE: A swellable synthetic fluoromica having dihydroxyethylmethyldodecyl ammonium ions between layers thereof (trade name: SOMASIF MEE manufactured by CO-OP CHEMICAL CO., LTD., average particle diameter: 6.2 $\mu$m)

MTE: A swellable synthetic fluoromica having methytrioctyl ammonium ions between layers thereof (trade name: SOMASIF MTE manufactured by CO-OP CHEMICAL CO., LTD., average particle diameter: 6.2 $\mu$m)

[Production of Resin]

A PCM-30 type twin screw extruder manufactured by IKEGAI CORPORATION was used for melt-kneading. The screw diameter was 30 mm, and the average groove depth was 2.5 mm.

Example 1

100 parts by mass of a resin A, 2 parts by mass of CDI, 4 parts by mass of MEE and 0.5 parts by mass of PEP 36 were dry-blended, melt-mixed at 190°C under conditions of the rotation speed (rps) of the screw of 200 rpm (= 3.3 rps) and the retention time of 1.6 minutes, extruded, processed into a pellet shape, and dried to obtain a resin composition. The evaluation results of the physical properties and hydrolysis resistance of the obtained composition are shown in Table 1.

Examples 2 to 22 and Comparative Examples 1 to 11

Components and blending rate thereof each of examples and comparative examples were changed as shown in Table 1. Otherwise, in the same manner as in Example 1, compositions were obtained. The evaluation results of the physical properties and hydrolysis resistance of the obtained compositions are shown in Table 1.

In example 21 and comparative example 10, 90 parts by mass of a resin A and 10 parts by mass of a resin B of a pellet-shaped were dry-blended and used before the resins A, B were supplied to an extruder.

[Table 1]

| | | Main resin composition (amount shows part by mass) | | | | | | | | | | Characteristics of molded body made of resin composition | | | | | | |
|---|---|---|---|---|---|---|---|---|---|---|---|---|---|---|---|---|---|---|
| | | Biodegradable resin | | Carbodiimide compound | | Layered silicate | | Phosphite organic compound | | Other additives | | Color tone | Flexural strength | Oxygen permeability coefficient | Hydrolysis resistance evaluation (60°C, 95%RH, 300 hours) | | Appearance evaluation (60°C, 95%RH, 500 hours) | |
| | | Type | Amount | Type | Amount | Type | Amount | Type | Amount | Type | Amount | YI | MPa | ml·mm/m²·day·MPa | Flexural strength | | Flexural strength | Appearance evaluation |
| | | | | | | | | | | | | | | | MPa | Retaining rate (%) | MPa | |
| Examples | 1 | A | 100 | CD I | 2 | MEE | 4 | PEP36 | 0.5 | | | 21 | 108.9 | 122 | 84.0 | 65.2 | 33.0 | Good |
| | 2 | A | 100 | CD I | 2 | MEE | 4 | PEP36 | 1 | | | 11 | 119.6 | 110 | 104.2 | 87.1 | 89.6 | Very good |
| | 3 | A | 100 | CD I | 2 | MEE | 4 | PEP36 | 2 | | | 7 | 125.0 | 130 | 98.1 | 78.5 | 85.3 | Very good |
| | 4 | A | 100 | CD I | 2 | MEE | 4 | PEP36 | 0.1 | | | 23 | 113.4 | 105 | 73.5 | 64.8 | 31.2 | Good |
| | 5 | A | 100 | CD I | 2 | MEE | 0.5 | PEP36 | 0.5 | | | 15 | 110.5 | 150 | 90.3 | 81.7 | 65.2 | Very good |
| | 6 | A | 100 | CD I | 2 | MEE | 2 | PEP36 | 0.5 | | | 18 | 98.5 | 140 | 75.5 | 76.6 | 74.5 | Very good |
| | 7 | A | 100 | CD I | 2 | MEE | 8 | PEP36 | 1 | | | 17 | 105.1 | 57 | 80.1 | 76.2 | 58.0 | Very good |
| | 8 | A | 100 | CD I | 0.5 | MEE | 4 | PEP36 | 0.5 | | | 20 | 110.2 | 98 | 70.1 | 63.6 | 35.2 | Good |
| | 9 | A | 100 | CD I | 4 | MEE | 4 | PEP36 | 0.5 | | | 19 | 102.5 | 89 | 88.0 | 85.9 | 80.6 | Very good |
| | 10 | A | 100 | CD I | 2 | MEE | 4 | JPH3800 | 0.1 | | | 21 | 110.1 | 105 | 76.0 | 69.0 | 55.0 | Good |
| | 11 | A | 100 | CD I | 2 | MEE | 4 | JPH3800 | 0.5 | | | 13 | 122.1 | 121 | 115.2 | 94.3 | 108.3 | Very good |
| | 12 | A | 100 | CD I | 2 | MEE | 4 | JPH3800 | 1 | | | 7 | 128.5 | 133 | 121.0 | 94.2 | 110.5 | Very good |
| | 13 | A | 100 | CD I | 2 | MEE | 4 | PEP36 | 0.5 | AO-330 | 0.5 | 10 | 110.5 | 98 | 92.1 | 83.3 | 89.6 | Very good |
| | 14 | A | 100 | CD I | 2 | MEE | 4 | PEP36 | 1 | AO-330 | 1 | 9 | 116.8 | 97 | 105.3 | 90.2 | 84.9 | Very good |
| | 15 | A | 100 | CD I | 2 | MEE | 4 | PEP36 | 0.5 | T-234 | 0.5 | 12 | 101.6 | 105 | 83.6 | 82.3 | 70.4 | Very good |
| | 16 | A | 100 | CD I | 2 | MEE | 4 | PEP36 | 0.5 | UV1164 | 0.5 | 13 | 106.0 | 95 | 83.5 | 78.8 | 71.3 | Very good |
| | 17 | A | 100 | CD I | 2 | MEE | 4 | PEP36 | 0.5 | AO-330/XL-1 | Each of 0.25 | 12 | 106.7 | 93 | 88.5 | 82.9 | 75.5 | Very good |
| | 18 | A | 100 | CD I | 2 | MEE | 4 | 2112 | 0.5 | AO-330 | 0.5 | 17 | 101.7 | 98 | 64.5 | 63.4 | 28.5 | Good |
| | 19 | A | 100 | CD I | 2 | MEE | 4 | JPH3800 | 0.5 | AO-330 | 0.5 | 12 | 105.4 | 102 | 93.2 | 88.4 | 88.5 | Very good |
| | 20 | A | 100 | CD I | 2 | MTE | 4 | PEP36 | 0.5 | AO-330 | 0.5 | 15 | 102.3 | 145 | 78.1 | 76.3 | 35.1 | Good |
| | 21 | A/B | 90/10 | CD I | 2 | MEE | 4 | PEP36 | 0.5 | AO-330 | 0.5 | 14 | 104.7 | 118 | 82.5 | 78.8 | 32.3 | Good |
| | 22 | A | 100 | CD I | 2 | MEE | 4 | PEP36 | 0.5 | CHIMASSOR | 0.5 | 16 | 102.1 | 101 | 80.7 | 79.0 | 62.1 | Good |
| Comparative examples | 1 | A | 100 | | | | | | | | | 15 | 135.4 | 200 | 39.2 | 29.0 | 0.6 | Poor |
| | 2 | A | 100 | CD I | 2 | | | | | | | 10 | 111.7 | 200 | 86.0 | 77.0 | Incapable measurement | Poor |
| | 3 | A | 100 | | | MEE | 4 | | | | | 44 | 105.8 | 103 | 8.0 | 7.6 | Incapable measurement | Poor |
| | 4 | A | 100 | CD I | 2 | MEE | 4 | | | | | 34 | 109.1 | 98 | 56.9 | 52.2 | 21.1 | Poor |
| | 5 | A | 100 | | | MEE | 4 | PEP36 | 0.5 | | | 16 | 97.5 | 95 | 10.5 | 10.8 | Incapable measurement | Poor |
| | 6 | A | 100 | CD I | 2 | MEE | 4 | | | AO-330 | 0.5 | 17 | 106.0 | 88 | 62.4 | 58.9 | Incapable measurement | Poor |
| | 7 | A | 100 | CD I | 2 | MEE | 4 | | | T-326 | 0.5 | 40 | 98.8 | 100 | 50.8 | 51.4 | Incapable measurement | Poor |
| | 8 | A | 100 | CD I | 2 | MEE | 4 | | | UV1164 | 0.5 | 29 | 106.3 | 115 | 57.4 | 54.0 | 18.3 | Poor |
| | 9 | A | 100 | CD I | 2 | MTE | 4 | | | | | 27 | 95.4 | 140 | 38.3 | 40.1 | Incapable measurement | Poor |

| 10 | A/B | 90/10 | CDI | 2 | MEE | 4 | | | | | 35 | 102.2 | 135 | 11.5 | 11.3 | Incapable measurement | Poor |
| 11 | A | 100 | CD I | 2 | MEE | 4 | | | CHIMASSOR | 0.5 | 42 | 109.5 | 98 | 42.5 | 38.8 | Incapable measurement | Poor |

A: Polylactic acid    B: Terephthalic acid/adipic acid/1,4-butanediol copolymer    CDI: N,N'-di-2,6-diisopropylphenylcarbodiimide

MEE: SOMASIF MEE    MTE: SOMASIF MTE

PEP-36: Bis(2,6-di-tert-butyl-4-methylphenyl)-pentaerythritol-di-phosphite    JPH3800: Hydrogenated bisphenol A · pentaerythritol phosphite polymer

AO-330: 1,3,5-trimethyl-2,4,6-tris(3,5-di-tert-butyl-4-hydroxybenzyl)benzene    XL-1: 2,2- oxamidebis-[ethyl-3-(3,5-di-t-butyl-4-hydroxyphenyl)propionate]

T-234: 2-(2H-benzotriazole-2-yl)-4-6-bis(1-methyl-1-phenylethyl)phenol    UV-1164: 2-[4,6-bis(2,4-dimethylphenyl)-1,3,5-triazine-2-yl]-5-(octyloxy)phenol

T-326: 2-(2'-hydroxy-3'-t-butyl-5'-methylphenyl)-5-chlorobenzotriazole

CHIMASSOR: Poly[{6-(1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}]

EP 1 876 205 B1

In each of the resin compositions of examples 1 to 22, the retaining rate of the flexural strength of not less than 60% was maintained, and the test pieces after moisture heat test had a surface on which low-molecular weight substances or metal salts were not deposited, and had superior appearance. Since each of the resin compositions contained the layered silicate, the resin composition had low oxygen permeability coefficient. Although the resin composition contained the layered silicate, the resin composition had a low YI value.

In examples 13 to 22, the same hydrolysis resistance effect as that of the case using only the phosphite was obtained by using the phosphite compound along with the other additive by the clear comparison of examples 13 to 22 and systems using only the additive other than the phosphite compound as shown in comparative examples 6 to 8, 11.

On the other hand, each of comparative examples had the following problems. Since the resin compositions of comparative examples 1, 2 did not contain the layered silicate, the resin compositions had low gas barrier property. Since the resin compositions of comparative examples 1,2 did not contain the phosphite compound, the resin compositions had inferior hydrolysis resistance. Since the resin composition of comparative example 3 had excellent gas barrier property, but contained neither the carbodiimide compound nor the phosphite compound, the resin composition had inferior color tone, and had insufficient hydrolysis resistance and appearance. Since the resin composition of comparative example 5 did not contain the carbodiimide compound, the hydrolysis resistance of the resin composition did not reach an aimed level. Since the resin compositions of comparative examples 4, 6 to 11 did not contain the phosphite compound, the resin compositions had insufficient, hydrolysis resistance and appearance, and the resin compositions other than that of comparative example 6 had insufficient color tone.

**Claims**

1. A biodegradable resin composition comprising:

   100 parts by mass of a biodegradable polyester resin comprising not less than 80 % by mass of polylactic acid;
   0.1 to 5 parts by mass of a carbodiimide compound;
   0.1 to 10 parts by mass of a layered silicate containing primary, secondary, tertiary or quaternary ammonium ions ionically bonded between layers thereof; and
   0.01 to 5 parts by mass of a phosphite organic compound.

2. The biodegradable resin composition according to claim 1, wherein the biodegradable resin composition has a strength-retaining rate of not less than 60% when being held at 60°C and at a relative humidity of 95 % for 300 hours.

3. The biodegradable resin composition according to claim 1, wherein the biodegradable resin composition has a YI value of not more than 25 as measured by a colorimeter.

4. A biodegradable resin composition comprising :

   100 parts by mass of a biodegradable polyester resin comprising not less than 80 % by mass of polylactic acid;
   0.1 to 5 parts by mass of a carbodiimide compound;
   0.1 to 10 parts by mass of a layered silicate containing primary, secondary, tertiary or quaternary ammonium ions ionically bonded between layers thereof;
   a phosphite organic compound; and
   at least one additive selected from the group consisting of a hindered phenol compound, a benzotriazole compound, a triazine compound and a hindered amine compound, wherein
   the biodegradable resin composition comprises the phosphite organic compound and the additive in an amount of 0.01 to 5 parts by mass in total.

5. The biodegradable resin composition according to claim 4, wherein the biodegradable resin composition has a strength-retaining rate of not less than 60% when being held at 60°C and at a relative humidity of 95 % for 300 hours.

6. The biodegradable resin composition according to claim 4, wherein the biodegradable resin composition has a YI value of not more than 25 as measured by a colorimeter.

7. A molded body comprising the biodegradable resin composition according to any one of claims 1 to 6.

8. A method for producing a biodegradable resin composition comprising :

adding a layered silicate containing primary, secondary, tertiary or quaternary ammonium ions ionically bonded between layers thereof when melt-mixing the biodegradable resin composition or when polymerizing the biodegradable polyester resin, in producing the biodegradable resin composition according to any one of claims 1 to 6.

9. A method for producing a biodegradable resin composition comprising :

adding a carbodiimide compound and a phosphite compound when melt-mixing the biodegradable resin composition or when polymerizing the biodegradable polyester resin, in producing the biodegradable resin composition according to any one of claims 1 to 6.


**Patentansprüche**

1. Biologisch abbaubare Harzzusammensetzung mit:

100 Masseteilen eines biologisch abbaubaren Polyesterharzes mit nicht weniger als 80 Masse-% Polymilchsäure;
0,1 bis 5 Masseteilen einer Carbodiimidverbindung;
0,1 bis 10 Masseteilen eines geschichteten Silicats, das primäre, sekundäre, tertiäre oder quaternäre Ammoniumionen enthält, die zwischen dessen Schichten ionisch gebunden sind; und
0,01 bis 5 Masseteilen einer organischen Phosphitverbindung.

2. Biologisch abbaubare Harzzusammensetzung nach Anspruch 1, **dadurch gekennzeichnet, dass** sie eine Festigkeitsbeibehaltungsrate von nicht weniger als 60 % hat, wenn sie 300 Stunden bei 60 °C und bei einer relativen Feuchtigkeit von 95 % gehalten wird.

3. Biologisch abbaubare Harzzusammensetzung nach Anspruch 1, **dadurch gekennzeichnet, dass** sie einen mit einem Kolorimeter gemessenen YI-Wert von nicht mehr als 25 hat.

4. Biologisch abbaubare Harzzusammensetzung mit:

100 Masseteilen eines biologisch abbaubaren Polyesterharzes mit nicht weniger als 80 Masse-% Polymilchsäure;
0,1 bis 5 Masseteilen einer Carbodiimidverbindung;
0,1 bis 10 Masseteilen eines geschichteten Silicats, das primäre, sekundäre, tertiäre oder quaternäre Ammoniumionen enthält, die zwischen dessen Schichten ionisch gebunden sind;
einer organischen Phosphitverbindung und
mindestens einem Zusatzstoff aus der Gruppe behinderte Phenolverbindung, Benzotriazolverbindung, Triazinverbindung und behinderte Aminverbindung,

wobei die biologisch abbaubare Harzzusammensetzung die organische Phosphitverbindung und den Zusatzstoff in einer Menge von insgesamt 0,01 bis 5 Masseteilen enthält.

5. Biologisch abbaubare Harzzusammensetzung nach Anspruch 4, **dadurch gekennzeichnet, dass** sie eine Festigkeitsbeibehaltungsrate von nicht weniger als 60 % hat, wenn sie 300 Stunden bei 60 °C und bei einer relativen Feuchtigkeit von 95 % gehalten wird.

6. Biologisch abbaubare Harzzusammensetzung nach Anspruch 4, **dadurch gekennzeichnet, dass** sie einen mit einem Kolorimeter gemessenen YI-Wert von nicht mehr als 25 hat.

7. Formkörper mit der biologisch abbaubaren Harzzusammensetzung nach einem der Ansprüche 1 bis 6.

8. Verfahren zur Herstellung einer biologisch abbaubaren Harzzusammensetzung mit dem folgenden Schritt:

Zugeben eines geschichteten Silicats, das primäre, sekundäre, tertiäre oder quaternäre Ammoniumionen enthält, die zwischen dessen Schichten ionisch gebunden sind, wenn bei der Herstellung der biologisch abbaubaren Harzzusammensetzung nach einem der Ansprüche 1 bis 6 die biologisch abbaubare Harzzusammensetzung schmelzgemischt wird oder wenn das biologisch abbaubare Polyesterharz polymerisiert wird.

9. Verfahren zur Herstellung einer biologisch abbaubaren Harzzusammensetzung mit dem folgenden Schritt:

Zugeben einer Carbodiimidverbindung und einer Phosphitverbindung, wenn bei der Herstellung der biologisch abbaubaren Harzzusammensetzung nach einem der Ansprüche 1 bis 6 die biologisch abbaubare Harzzusammensetzung schmelzgemischt wird oder wenn das biologisch abbaubare Polyesterharz polymerisiert wird.

**Revendications**

1. Composition de résine biodégradable comprenant :

100 parties en masse d'une résine de polyester biodégradable comprenant au moins 80 % en masse d'acide polylactique ;
0,1 à 5 parties en masse d'un composé carbodiimide ;
0,1 à 10 parties en masse d'un silicate en couches contenant des ions ammonium primaires, secondaires, tertiaires ou quaternaires ioniquement liés entre des couches de celui-ci ; et
0,01 à 5 parties en masse d'un composé organique phosphite.

2. Composition de résine biodégradable selon la revendication 1, dans laquelle la composition de résine biodégradable présente un taux de conservation des propriétés de résistance d'au moins 60 % lorsqu'elle est maintenue à 60 °C et sous une humidité relative de 95 % pendant 300 heures.

3. Composition de résine biodégradable selon la revendication 1, dans laquelle la composition de résine biodégradable possède une valeur YI d'au plus 25 lorsque mesurée par un colorimètre.

4. Composition de résine biodégradable comprenant :

100 parties en masse d'une résine de polyester biodégradable comprenant au moins 80 % en masse d'acide polylactique ;
0,1 à 5 parties en masse d'un composé carbodiimide ;
0,1 à 10 parties en masse d'un silicate en couches contenant des ions ammonium primaires, secondaires, tertiaires ou quaternaires ioniquement liés entre des couches de celui-ci ;
un composé organique phosphite ; et
au moins un additif sélectionné dans le groupe constitué d'un composé phénol empêché, d'un composé benzotriazole, d'un composé triazine et d'un composé amine empêchée, dans laquelle :

la composition de résine biodégradable comprend le composé organique phosphite et l'additif en une quantité de 0,01 à 5 parties en masse au total.

5. Composition de résine biodégradable selon la revendication 4, dans laquelle la composition de résine biodégradable présente un taux de conservation des propriétés de résistance d'au moins 60 %, lorsqu'elle est maintenue à 60 °C et sous une humidité relative de 95 % pendant 300 heures.

6. Composition de résine biodégradable selon la revendication 4, dans laquelle la composition de résine biodégradable présente une valeur YI d'au plus 25 lorsque mesurée par un colorimètre.

7. Corps moulé comprenant la composition de résine biodégradable selon l'une quelconque des revendications 1 à 6.

8. Procédé pour produire une composition de résine biodégradable comprenant :

ajouter un silicate en couches contenant des ions ammonium primaires, secondaires, tertiaires ou quaternaires ioniquement liés entre les couches de celui-ci lors du mélange à l'état fondu de la composition de résine biodégradable ou lors de la polymérisation de la résine de polyester biodégradable, dans la production de la composition de résine biodégradable selon l'une quelconque des revendications 1 à 6.

9. Procédé pour produire une composition de résine biodégradable comprenant :

ajouter un composé carbodiimide et un composé phosphite lors du mélange à l'état fondu de la composition de résine biodégradable ou lors de la polymérisation de la résine de polyester biodégradable, dans la production de la composition de résine biodégradable selon l'une quelconque des revendications 1 à 6.

**EP 1 876 205 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001261797 A
- JP 2001049097 A
- JP 2002338796 A
- JP 9048908 A
- JP 2000212422 A